# EUROPÄISCHE PATENTSCHRIFT

(11) **EP 0 666 974 B1**
(45) Veröffentlichungstag und Bekanntmachung des Hinweises auf die Patenterteilung: **18.06.1997**
(21) Anmeldenummer: 93924010.7
(22) Anmeldetag: 28.10.1993
(51) Int. Cl.: G01B 17/02

(54) **VERFAHREN UND VORRICHTUNG ZUM BERÜHRUNGSLOSEN BESTIMMEN DES FLÄCHENGEWICHTS VON DÜNNEN MATERIALIEN**
PROCESS AND DEVICE FOR NON-CONTACT DETERMINATION OF THE MASS PER UNIT AREA OF THIN MATERIALS
PROCEDE ET DISPOSITIF PERMETTANT DE DETERMINER SANS CONTACT LA MASSE PAR UNITE DE SURFACE DE MATERIAUX MINCES

(30) Priorität: 28.10.1992 DE 4236436
(43) Veröffentlichungstag der Anmeldung: 16.08.1995
(73) Patentinhaber: Knorr, Helmut, 86919 Utting (DE)
(72) Erfinder: Knorr, Helmut, 86919 Utting (DE)
(86) Internationale Anmeldenummer: DE9301041
(87) Internationale Veröffentlichungsnummer: WO9410533

(56) Entgegenhaltungen:
- FR-A- 2 234 545
- FR-A- 2 368 013
- GB-A- 2 089 983

## Beschreibung

Aus der DE-PS 30 48 710 ist ein gattungsgemäßes Verfahren bekannt geworden, bei dem zuerst die Schallaufzeit zwischen Sender und Empfänger ohne dazwischen liegendem Material gemessen wird. Wenn diese Laufzeit bekannt ist, wird das zu messende Material zwischen Sender und Empfänger gebracht. Um nun zu gewährleisten, daß vom Empfänger nur direkte aber keine reflektierten Wellen gemessen werden, strahlt der Sender impulsförmig Ultraschallwellen ab und der Empfänger wird nach der Abgabe jedes Impulses um die Schallaufzeit verzögert eingeschaltet und spätestens nach der doppelten Schallaufzeit wieder abgeschaltet. Die Anwendung der an und für sich seit langem bekannten Gate-Technik bei einer Ultraschalldickenmessung hat gegenüber den bis dahin bekannten Verfahren große Vorteile gebracht, kann jedoch nicht alle Probleme lösen. Das beschriebene Verfahren wird insbesondere zur Vermessung von Geldscheinen eingesetzt, so daß in kurzen Zeitabständen immer wieder Kalibriermöglichkeiten in den freien Räumen zwischen den Scheinen gegeben sind.

Soll jedoch z.B. die Produktion von Folien überwacht werden, so besteht diese Möglichkeit nicht. Eine Schallaufzeitmessung ist nur jeweils vor Produktionsbeginn möglich. Da sich jedoch der Abstand von Sensor und Empfänger durch temperaturbedingte Materialausdehnungen ändern kann, aber auch die Schallgeschwindigkeit bei Temperaturänderungen der Luft schwankt, sind die Meßergebnisse ohne sich ständig wiederholende Kalibrierung durch Laufzeitmessung nicht reproduzierbar. Das Meßergebnis wird noch weniger aussagekräftig, wenn das Dickenprofil einer Folie quer zur Transportrichtung ermittelt werden soll. Hier müssen Sender und Empfänger über die Breite der Folie traversieren, wobei in keiner Weise für einen gleichbleibenden Abstand im geforderten Genauigkeitsbereich garantiert werden kann.

Die FR-A-2 368 013 beschreibt eine Anordnung zur berührungslosen Bestimmung der Dicke von Materialien bei der Sender und Empfänger auf der gleichen Seite des Materials angeordnet sind. Dabei kann es zu Phantomechos kommen, die die Messung erheblich beeinflussen würden. Es werden Maßnahmen beschrieben, durch die eine Störung der Messung durch Phantomechos vermieden werden kann. Hierzu wird vorgeschlagen den Sender in bestimmter Weise zu steuem. Der Sendeimpuls soll erst dann ausgelöst werden, wenn nach dem Empfang des letzten Phantomechos eine Zeit verstrichen ist, die größer als die Schallaufzeit und die Impulsdauer ist. Das bedeutet, daß zwischen dem Sendebeginn eines ersten Signals und dem Sendebeginn eines nachfolgenden Signals im günstigsten Fall (wenn keine Phantomechos auftreten) ein Zeitabstand von (Schallaufzeit + Impulsdauer) x 2 besteht und somit für eine aussagekräftige Auswertung in einer möglichst kurzen Meßperiode nicht sehr viele Messungen zur Verfügung stehen.

Es war daher die Aufgabe der Erfindung sowohl ein Messverfahren als auch eine Vorrichtung zu schaffen, mit denen die oben beschriebenen Nachteile vermieden werden können, die sich zur Überwachung der Produktion von Folien eignen und sogar zur Ermittlung des Dickenprofils in Quenichtung herausgezogen werden können.

Gelöst wird die Aufgabe durch ein Verfahren mit den kennzeichnenden Merkmalen von Anspruch 1 und eine Vorrichtung mit den kennzeichnenden Merkmalen von Anspruch 6. Durch die erfindungsgemäßen Merkmale ist nur einmal eine sehr grobe Messung des Abstandes von Sender und Empfänger notwendig. Dadurch, daß erst ab einer bestimmten Amplitudengröße gemessen wird läßt sich sogar eine Abstandsänderung von Sender und Empfänger ausgleichen. Hierzu muß nur das Meßfenster entsprechend verschoben werden. Während die Meßdauer immer gleich bleibt, orientiert sich der Meßbeginn an dem Signal des Empfängers. Auf diese Weise läßt sich der Meßbeginn praktisch unabhängig vom Abstand zwischen Sender und Empfänger und damit unabhängig von der Schallaufzeit immer auf den gleichen Nulldurchgang legen. Eine sich ständig wiederholende Kalibriermessung ohne Material zwischen Sender und Empfänger erübrigt sich somit.

Zur Auswertung wird das Ausgangssignal des Empfängers in vorteilhafter Weise mit einem ganzzahligen Vielfachen der Schallfrequenz digital abgetastet. Um Amplitudenhöhe und -phase zu ermitteln wird das Signal erfindungsgemäß einer Fourier-Transformation unterzogen. Die ermittelten Parameter können dann zur Bestimmung des Flächengewichts der Folie mit einer Kalibrierkurve verglichen oder mit einer analytischen Funktion verrechnet werden.

Zur Festlegung der Kalibrierkurve wird in regelmäßigen Intervallen eine Referenzmessung an einem Muster mit bekannter Dicke und Dichte durchgeführt.

Bei einer Variante des Verfahrens lassen sich noch genauere Ergebnisse erzielen, da sich auch Temperaturunterschiede der Luft, die sich während der Betriebszeit ergeben können und auch bei gleichen Sender-Empfänger Abstand zu unterschiedlichen Schallaufzeiten führen, kompensieren lassen. Hierzu wird ein zweiter Empfänger vorgesehen, dessen Abstand zum Sender zwar unterschiedlich ist, dessen Ausgangssignal aber auf gleiche Weise wie das Signal des ersten Empfängers ausgewertet wird.

Weitere Vorteile der Erfindung ergeben sich aus den Unteransprüchen und werden durch Ausführungsbeispiele anhand der Zeichnung eingehend erläutert. Es zeigt:
- Fig. 1: ein erstes Ausführungsbeispiel mit feststehendem Sender und Empfänger,
- Fig. 2: ein zweites Ausführungsbeispiel mit einem Sender und ein zwei Empfängern,
- Fig. 3: ein drittes Ausführungsbeispiel, bei dem Sender und Empfänger über eine Folienbahn traversieren und
- Fig. 4: ein Ausgangssignal eines Senders.

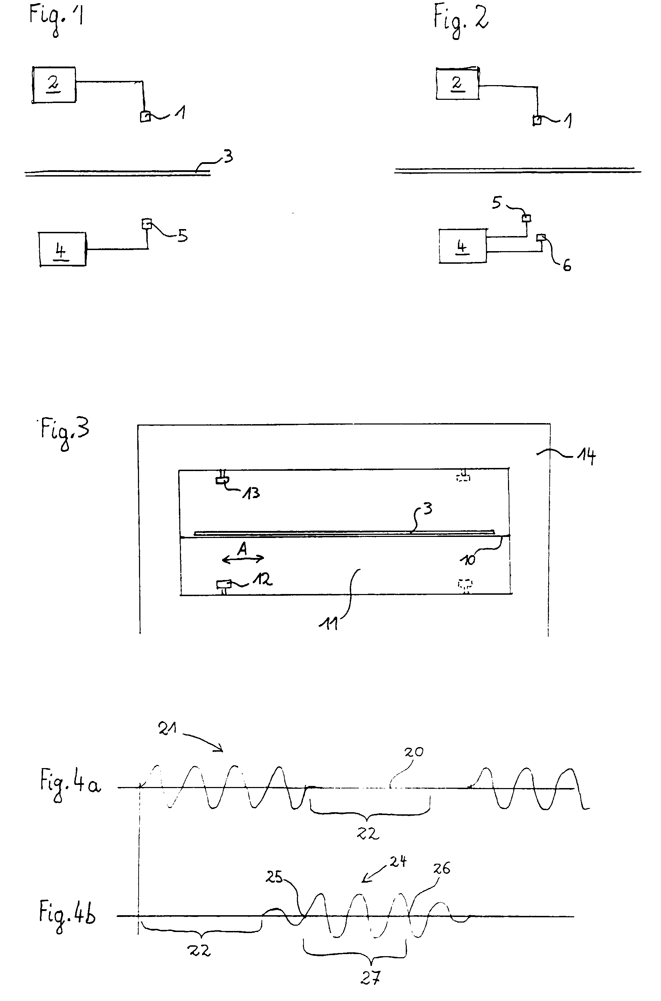

In dem in Fig.1 gezeigten Ausführungsbeispiel wird ein Sender 1 von einer Steuerung 2 mit einem Erregersignal versorgt, welches in zeitlichem Abstand hintereinander angeordnete Pulspakete aufweist. Der Sender 1 erzeugt ein diesem Erregersignal entsprechendes Ultraschallsignal. Der zeitliche Verlauf des Erregersignals ist schematisch in Fig.4a dargestellt. Der Abstand 20 zwischen den einzelnen Pulspaketen 21 ist so gewählt, daß er mit Sicherheit größer als die Laufzeit 22 zwischen Sender 1 und Empfänger 5 (Fig.1) ist. Das Ausgangssignal des Empfängers 5 ist schematisch in Fig.4b dargestellt. Da das Empfängerbauteil eine gewisse Trägheit aufweist ist die Amplitude des Signals erst ansteigend, bleibt dann für eine gewisse Zeit gleich und fällt dann wieder ab.

Wird nun der Sender 1 durch ein Pulspaket 21 angeregt und sendet dadurch Ultraschallwellen aus, so setzen diese die Membran des Empfängers in Schwingung, die das Ausgangssignal 24 verursacht, welches zu dem Erregersignal in etwa um die Laufzeit 22 versetzt ist.

Dieses Ausgangssignal wird in der Auswerteeinheit 4 digital abgetastet und einer Fourier-Transformation unterzogen. Auf diese Weise lassen sich hinreichend genau Amplitudengröße und Phase feststellen.

Die Wertung des Signals zur Bestimmung des Flächengewichts der zwischen Sender 1 und Empfänger 5 liegenden Folie 3 beginnt erfindungsgemäß erst ab einer bestimmten Amplitudenhöhe. Bei dem in Fig.4b gezeigten Signal setzt die Auswertung bei dem mit 25 bezeichneten Nulldurchgang ein. Nach der Zeit 27, die auf jeden Fall kürzer als die Laufzeit 22 ist wird die Auswertung wieder abgebrochen. Bei dem nächsten Pulspaket des Ausgangssignals beginnt die Auswertung beim gleichen Nulldurchgang, auch dann wenn sich die Laufzeit geändert oder die Phase verschoben hat. Dadurch, daß wiederum für die gleiche Zeitspanne 27 das Signal ausgewertet wird, ist die Messung auch bei sich änderndem Abstand zwischen Sender 1 und Empfänger 5 und bei sich ändernder Lufttemperatur und -geschwindigkeit reproduzierbar.

Eine weiter verbesserte Ausführungsform ist in Fig.2 gezeigt. Gleiche Bauteile sind mit gleichen Bezugszeichen versehen. Zu dem Empfänger 5 ist noch ein zweiter Empfänger 6 in einem größeren Abstand vorgesehen. Durch die Verzögerung, die das Ausgangssignal des Empfängers 6 zum Ausgangssignal des Empfängers 5 aufweist und dem bekannten Abstand der beiden Empfänger läßt sich sogar die Lufttemperatur unabhängig von einer Abstandsänderung des Senders 1 von der Einheit aus den Empfängern 5 und 6 ermitteln.

Die in Fig.2 beschriebene Ausführungsform läßt sich besonders vorteilhaft in der in Fig.3 gezeigten Dickenmeßvorrichtung einsetzen. Die Folie 3 liegt auf einem Tisch 10 auf, der in Querrichtung einen Meßspalt 11 aufweist. In diesem Meßspalt ist eine Empfängereinheit 12 angeordnet, die sich in Richtung des Doppelpfeiles A verfahren läßt. Die Einheit 12 umfaßt zwei Empfänger, wie sie in Fig.2 mit dem Bezugszeichen 5 und 6 versehen sind. Der Sender 13, der in dem starren Rahmen 14 ebenfalls verfahrbar gelagert ist bewegt sich synchron mit der Empfangseinheit 12 jeweils in die gestrichelt gezeichnete Stellung und wieder zurück. Auf diese Weise läßt sich die Dicke der Folie 10 über ihre gesamte Breite überwachen.

## Patentansprüche

1. Verfahren zur berührungslosen Bestimmung des Flächengewichts bzw. der Dicke von dünnen Materialien, insbesondere Folien, wobei ein auf einer Seite des Materials (3) angeordneter Empfänger (5; 6; 12) die von einem auf der gegenüberliegenden Seite des Materials angeordneten Sender (1; 13) ausgehenden Ultraschallwellen registriert, dadurch gekennzeichnet, daß von dem Sender (1; 13) Schallimpulse abgestrahlt werden, deren zeitlicher Abstand (20) größer als die Schallaufzeit (22) zwischen Sender und Empfänger ist und daß nur Ausgangssignale des Empfängers zur Bestimmung des Flächengewichts bzw. der Dicke ausgewertet werden, deren Amplitude einen bestimmten Betrag überschreitet und wobei die Länge (27) des ausgewerteten Signals pro Impuls geringer als die Schallaufzeit ist.

2. Verfahren nach Anspruch 1, dadurch gekennzeichnet, daß die Auswertung bei jedem Impuls (21) einer Meßperiode, unabhängig von einer Veränderung des Abstandes zwischen Sender und Empfänger, an der gleichen Stelle (25) des Ausgangssignals (24) des Empfängers, insbesondere am gleichen Nulldurchgang, begonnen wird, während die Länge (27) des ausgewerteten Signals pro Impuls unverändert bleibt.

3. Verfahren nach Anspruch 1, dadurch gekennzeichnet, daß das Ausgangssignal (24) des Empfängers (5) digital mit einem ganzzahligen Vielfachen der Ultraschallfrequenz abgetastet und Amplitudenhöhe und Phase durch Fourier-Transformation ermittelt werden.

4. Verfahren nach Anspruch 3, dadurch gekennzeichnet, daß das Flächengewicht bzw. die Dicke über eine Kalibrierkurve oder eine analytische Funktion aus ermittelter Amplitudenhöhe und Phase bestimmt wird.

5. Verfahren nach Anspruch 1, dadurch gekennzeichnet, daß das Ausgangssignal eines zweiten Empfängers (6), der einen anderen Sender-Empfänger Abstand aufweist wie der erste Empfänger (5), genauso ausgewertet wird wie das Ausgangssignal des ersten Empfängers (5), und daß mit Hilfe der Laufzeitdifferenz eine Temperatur- bzw. Abstandskompensation zwischen Sender und Empfänger durchgeführt wird.

6. Vorrichtung zum berührungslosen Bestimmen des Flächengewichts bzw. der Dicke von dünnen Materialien, insbesondere Folien (3), mit einem Ultraschalisender (1), der auf einer Seite des Materials angeordnet ist und einem Empfänger (5) auf der gegenüberliegenden Seite des Materials, dadurch gekennzeichnet, daß eine Sendersteuerung (2) vorgesehen ist, die den Sender (1) mit Pulspaketen (21) hoher Frequenz beaufschlagt, deren zeitlicher Abstand (20) größer als die Schallaufzeit (22) zwischen Sender (1) und Empfänger(5) ist, daß eine Auswerteeinrichtung (4) vorgesehen ist, die ein Ausgangssignal (24) des Empfängers (5) erst ab einer bestimmten Amplitudenhöhe zur Bestimmung des Flächengewichts bzw. der Dicke wertet und die die Auswertung des Ausgangssignals (24) pro Pulspaket (21) nach einer Zeit (27) abbricht, die geringer ist als die Schallaufzeit(22) zwischen Sender (1) und Empfänger (5).

7. Vorrichtung nach Anspruch 6, dadurch gekennzeichnet, daß die Auswerteeinrichtung (4) eine digitale Abtasteinheit enthält, die mit einem ganzzahligen Vielfachen der Frequenz der Sendersteuerung (2) betrieben wird.

8. Vorrichtung nach Anspruch 7, dadurch gekennzeichnet, daß der Sender (1) bzw. der Empfänger (5) als breitbandiger piezoelektrischer Wandler ausgeführt ist.

9. Vorrichtung nach Anspruch 8, dadurch gekennzeichnet, daß ein zweiter Empfänger (6) in einem zweiten Abstand zum Sender (1) vorgesehen ist.

## Claims

1. Method to determine, without contact, the weight per unit area or thickness of thin materials, especially foils, in which a transmitter (1, 13) sends ultrasonic signals to a receiver (5, 6, 12) located on the opposite side of the material (3), characterized in that the transmitter (1, 13) sends pulses of sound at time intervals (20) greater than that which the sound signal takes to propagate (22) between transmitter and receiver, in that only signals leaving the receiver with an amplitude exceeding a prescribed level are processed, and in that the length (27) of the signal analyzed per pulse is less than the time of signal propagation from transmitter to receiver.

2. Method as in claim 1, characterized in that the processing of every pulse (21) during each measurement period begins at the same point (25), specifically, the same zero-crossing, of the output signal (24) of the receiver independently of changes in the distance beteen transmitter and receiver, while the length (27) of the signal processed per impulse remains constant.

3. Method as in claim 1, characterized in that the output signal (24) of the receiver (5) is digitally sampled at an integral multiple of the ultrasound frequency and and in that the amplitude and phase of the signal are determined by Fourier transform.

4. Method as in claim 3, characterized in that the weight per unit area or thickness of the material is determined by means of a reference curve or an analytical function of the amplitude and phase of the signal.

5. Method as in claim 1, characterized in that the output of a second receiver (6), mounted at a different distance from the transmitter (13) relative to the first receiver (5), is analysed in the same way as that of the first receiver (5), and that with use of the difference in the propagation time of the signal the temperature or distance between transmitter and receiver is compensated.

6. Apparatus to determine, without contact, the weight per unit area or thickness of thin materials, especially foils, in which a transmitter (1) sends ultrasonic signals to a receiver (5) located on the opposite side of the material (3), characterized by a controller unit (2) that applies to the sender (1) packets of high-frequency pulses (21) the time interval between which is greater than the signal propagation delay (22) between the transmitter (1) and receiver (5), by a processor unit (4) which analyses the output signal of the receiver (5) to determine weight per unit area or thickness only when the signal exceeds a prescribed amplitude and which concludes the analysis of the output signal (24) per pulse packet (21) after a time (27) which is less than the time of propagation (22) of the signal between transmitter (1) and receiver (5).

7. Apparatus as in claim 6, characterized in that the processor unit (4) includes a digital sampling unit operating at an integral multiple of the signal frequency of the controller unit.

8. Apparatus as in claim 7, characterized in that the transmitter (1) and receiver (5) are wide-band piezoelectric converters.

9. Apparatus as in claim 8, characterized in that a second receiver (6) is mounted at a second distance from transmitter (1).

## Revendications

1. Procédure à la détermination sans contact du poids de la superficie ou de l'épaisseur de matériaux fins , spécialment de feuilles, où un récepteur (5;6;12), placé sur un côté du matériel (3), enregistre les ondes ultrasoniques sortant d'un émetteur (1,13), placé sur le côté opposé du matériel, spécifiée par le fait que du côté émetteur (1,13) sont émis des impulsions de son, dont la distance temporelle (20) est supérieure au temps de transit de son (22) entre émetteur et récepteur, et que seul des signaux de sortie de l'émetteur sont exploités pour la détermination du poids de la superficie ou de l'épaisseur, dont l'amplitude est supérieure à un chiffre déterminé, et où la longueur (27) du signal exploité par impulsion est inférieure au temps de transit du son.

2. Procédure suivant droit no.1, spécifiée par le fait que l'exploitation commence à chaque impulsion (21) d'une période de repérage au même endroit (25) du signal de sortie (24) de l'émetteur, surtout au même passage à zéro, et ceci sans aucune influence provenant d'un changement de la distance entre l'émetteur et le récepteur, la longueur (27) du signal exploité par impulsion restant inchangé.

3. Procédure suivant droit no.1, spécifiée par le fait que le signal de sortie (24) de l'émetteur (5) sera lu d'une façon digitale basée sur le multiple à chiffres entiers de la fréquence ultrasonique, et que le niveau de l'amplitude et la phase sont exploités par la transformation suivant Fourier.

4. Procédure suivant droit no.3, spécifiée par le fait que le poids de la superficie ou l'épaisseur sera déterminé en applicant une courbe de calibrage ou une fonction analytique du niveau de l'amplitude et la phase.

5. Procédure suivant droit no.1, spécifiée par le fait que le signal de sortie du deuxième émetteur (6), ayant une autre distance émetteur-récepteur que le premier émetteur (5), sera exploité de la même façon que le signal de sortie du premier émetteur (5), et que, à l'aide de la différence du temps de transit, sera réalisée une compensation de température ou de distance entre l'émetteur et le récepteur.

6. Dispositif pour la détermination sans contact du poids de la superficie ou de l'épaisseur de matériaux fins, spécialement de feuilles (3), à l'aide d'un émetteur d'ondes ultrasoniques (1), placé sur un côté du matériel, et d'un récepteur (5), placé du côté opposé du matériel, spécifié par le fait qu'une commande d'émetteur (2) est prévue pour mettre des séquences d'impulsions (21) de haute fréquences à l'émetteur, dont la distance temporelle (20) est supérieure au temps de transit de son (22) entre émetteur (1) et récepteur (5), et qu'un système d'exploitation (4) sera prévu, exploitant un signal de sortie (24) du récepteur (5) seulement à partir d'un niveau d'amplitude bien défini, destiné à la détermination du poids de la superficie ou de l'épaisseur, et arrêtant l'exploitation du signal de sortie (24) par séquence d'impulsions (21) après une période (27) inférieure au temps de transit du son (22) entre l'émetteur (1) et le récepteur(5).

7. Dispositif suivant droit no. 6, spécifié par le fait que le système d'exploitation (4) contiendra une unité de lecture digitale, activée par le multiple à chiffres entiers de la fréquence de la commande d'émetteur (2).

8. Dispositif suivant droit no. 7, spécifié par le fait que l'émetteur (1) ou le récepteur (5) sera réalisé comme un transformateur piézoélectronique à large bande.

9. Dispositif suivant droit no. 8, spécifié par le fait qu'un deuxième récepteur (6) sera prévu avec une deuxième distance de l'émetteur (1).
